# EUROPEAN PATENT SPECIFICATION

(11) **EP 2 494 169 B1**
(45) Date of publication and mention of the grant of the patent: **15.11.2017**
(21) Application number: 10766385.8
(22) Date of filing: 16.09.2010
(51) Int. Cl.: F02C 6/16, F02C 7/10, F02C 1/00, F17C 1/00

(54) **ADIABATIC COMPRESSED AIR ENERGY STORAGE SYSTEM WITH LIQUID THERMAL ENERGY STORAGE AND CORRESPONDING METHOD OF STORAGE**
ADIABATISCHE ENERGIESPEICHERUNG VON KOMPRIMIERTER LUFT MIT FLÜSSIGER THERMISCHEN ENERGIESPEICHERUNG UND ENTSPRECHENDES SPEICHERUNGSVERFAHREN
STOCKAGE ADIABATIC D'ÉNERGIE D'AIR COMPRIMÉ AVEC DU STOCKAGE THERMIQUE D'ÉNERGIE LIQUIDE ET PROCÉDÉ DE STOCKAGE CORRESPONDANT

(30) Priority: 30.10.2009 US 609449
(43) Date of publication of application: 05.09.2012
(73) Proprietor: General Electric Company, Schenectady, NY 12345 (US)
(72) Inventor: FREUND, Sebastian, W., 85748 Garching B. Muenchen (DE); FINKENRATH, Matthias, 85748 Garching B. Muenchen (DE); BOTERO, Cristina, Cambridge, MA 02139 (US); BELLONI, Clarissa, S.K., 85748 Garching B. Muenchen (DE); GONZALEZ SALAZAR, Miguel, Angel, 85748 Garching B. Munchen (DE); HOFFMANN, Stéphanie, Marie-Noelle, 80995 Muenchen (DE)
(74) Representative: Illingworth-Law, William Illingworth
(86) International application number: PCT/US2010/049060
(87) International publication number: WO 2011/053411

(56) References cited:
- EP-A1- 0 566 868
- DE-A1- 2 636 417
- DE-B- 1 247 751
- JP-A- 10 238 367
- US-A- 4 523 432
- US-A1- 2004 148 922
- US-A1- 2004 148 934

## Description

### BACKGROUND OF THE INVENTION

Embodiments of the invention relate generally to compressed air energy storage (CAES) systems and, more particularly, to a multi-stage thermal energy storage (TES) system in an adiabatic CAES system.

DE 26 36 417 A1 discloses a multi-stage compressor with intercooling. A heat exchanger is provided between a compressor and a turbine.

Air compression and expansion systems are used in a multitude of industries for a variety of applications. For example, one such application is the use of air compression and expansion systems for storing energy. Compressed air energy storage (CAES) systems typically include a compression train having a plurality of compressors that compress intake air and provide the compressed intake air to a cavern, underground storage, or other compressed air storage component. The compressed air is then later used to drive turbines to produce electrical energy. During operation of the compression stage of a CAES system, the compressed intake air is typically cooled. During operation of the expansion stage, air is discharged from underground storage through heaters and turbines and expands such that the air exits the turbines at ambient pressure.

Typically, compressors and turbines in CAES systems are each connected to a generator/motor device through respective clutches, permitting operation either solely of the compressors or solely of the turbines during appropriate selected time periods. During off-peak periods of electricity demand in the power grid (i.e., nights and weekends), the compressor train is driven through its clutch by the generator/motor. In this scheme, the generator/motor functions as a motor, drawing power from a power grid. The compressed air is then cooled and delivered to underground storage. During peak demand periods, with the turbine clutch engaged, air is withdrawn from storage and then heated and expanded through a turbine train to provide power by driving the generator/motor. In this scheme, the generator/motor functions as a generator, providing power to a power grid, for example.

One specific type of CAES system that has been proposed is an adiabatic compressed air energy storage system (ACAES), in which thermal energy storage (TES) unit(s) are employed to cool the compressed air prior to storage in the cavern and to reheat the air when it is withdrawn from the cavern and supplied to the turbine train. ACAES systems thus allow for storing energy with higher efficiency than non-adiabatic systems, since the heat generated during the air compression is not disposed of but used subsequently to preheat the compressed air during discharge through a turbine.

Currently proposed ACAES system designs typically incorporate a single TES unit. The use of a single TES unit results in the TES unit being forced to operate at a high temperature and high pressure. For example, a single TES unit may reach operating temperatures as high as 650° Celsius and at a pressure of 60 bar. The high temperature, high pressure, and large duty of the TES unit pose engineering challenges with regard to material, thermal expansion, heat losses, size and mechanical stresses. The need to address these engineering challenges leads to increased cost and long development times and presents a steep market barrier.

Additionally, the use of a single TES unit also results in decreased efficiency of the ACAES system. That is, turbomachinery (i.e., compressors and turbines) forced to operate at a high temperature and a high pressure ratio has a lower efficiency, as compared to turbomachinery that operates at a lower temperatures and pressure ratios. An arrangement where additional TES units are added between stages of the compressors and turbines functions to lower temperature and pressure ratios, thus helping increase the efficiency of the turbomachinery in the ACAES system.

An ACAES system implementing two TES units has been proposed by the German Aerospace Center (DLR); however, such an arrangement of two TES units still does not completely address the issues of temperature and pressure. That is, even with a reduction in temperature and pressure provided by the use of two TES units, the TES units are still forced to operate at temperatures around 500° Celsius. The presence of such high temperatures of operation remains a substantial barrier for implementing ACAES systems in commercial operation.

Therefore, it would be desirable to design a system and method that overcomes the aforementioned drawbacks.

### BRIEF DESCRIPTION OF THE INVENTION

The present invention is defined in the accompanying claims.

In accordance with one aspect of the invention, an adiabatic compressed air energy storage (ACAES) system includes a compressor system configured to compress air supplied thereto. The compressor system includes a plurality of compressors and a compressor conduit fluidly connecting the plurality of compressors together and having an air inlet and an air outlet. The ACAES system also includes an air storage unit connected to the air outlet of the compressor conduit and configured to store compressed air received from the compressor system, and a turbine system configured to expand compressed air supplied thereto from the air storage unit. The turbine system includes a plurality of turbines and a turbine conduit fluidly connecting the plurality of turbines together and having an air inlet and an air outlet. The ACAES system further includes a thermal energy storage (TES) system configured to remove thermal energy from compressed air passing through the compressor conduit and to return thermal energy to air passing through the turbine conduit. The TES system includes a container, a plurality of heat exchangers, a liquid TES medium conduit system fluidly coupling the container to the plurality of heat exchangers, and a liquid TES medium stored within the container. The TES system also includes a plurality of pumps coupled to the liquid TES medium conduit system and configured to transport the liquid TES medium between the plurality of heat exchangers and the container, and a thermal separation system positioned within the container configured to thermally isolate a first portion of the liquid TES medium at a lower temperature from a second portion of the liquid TES medium at a higher temperature.

In accordance with another aspect of the invention, a method for adiabatic compressed air energy storage (ACAES) includes supplying air to a compressor system, the compressor system including a plurality of compressor units fluidly connected by a compressor conduit. The method also includes compressing the air in the compressor system during a compression stage and storing the compressed air in a compressed air storage unit. The method also includes supplying the compressed air from the compressed air storage unit to a turbine system, the turbine system including a plurality of turbine units fluidly connected by a turbine conduit and expanding the air in the turbine system during an expansion stage. The method further includes, during each of the compression stage and the expansion stage, passing the air through a liquid thermal energy storage (TES) system coupled to each of the compressor conduit and the turbine conduit, the liquid TES system including a liquid storage volume, a plurality of heat exchangers fluidly coupled to the liquid storage volume, and a thermal separation unit configured to thermally isolate a liquid in the liquid storage volume on a first side of the thermal separation unit from a liquid in the liquid storage volume on a second side of the thermal separation unit.

In accordance with yet another aspect of the invention, an adiabatic compressed air energy storage (ACAES) system includes a compressor system configured to compress air supplied thereto, the compressor system including a plurality of compressors and a compressor conduit connecting the plurality of compressors and having an air inlet and an air outlet. The ACAES system also includes an air storage unit connected to the air outlet of the compressor conduit and configured to store compressed air received from the compressor system, and a turbine system configured to expand compressed air supplied thereto from the air storage unit. The turbine system includes a plurality of turbines and a turbine conduit connecting the plurality of turbines and having an air inlet and an air outlet. The ACAES system further includes a liquid thermal energy storage (TES) system comprising a TES liquid configured to remove thermal energy from compressed air passing through the compressor conduit and to return thermal energy to air passing through the turbine conduit, the liquid TES system further including a storage volume configured to store the TES liquid, a plurality of heat exchangers fluidly coupled to the storage volume, and a thermal separator positioned within the container and configured to thermally separate a hot volume of the TES liquid from a cold volume of the TES liquid within the storage volume.

Various other features and advantages will be made apparent from the following detailed description and the drawings.

### BRIEF DESCRIPTION OF THE DRAWINGS

The drawings illustrate preferred embodiments presently contemplated for carrying out the invention.

In the drawings:

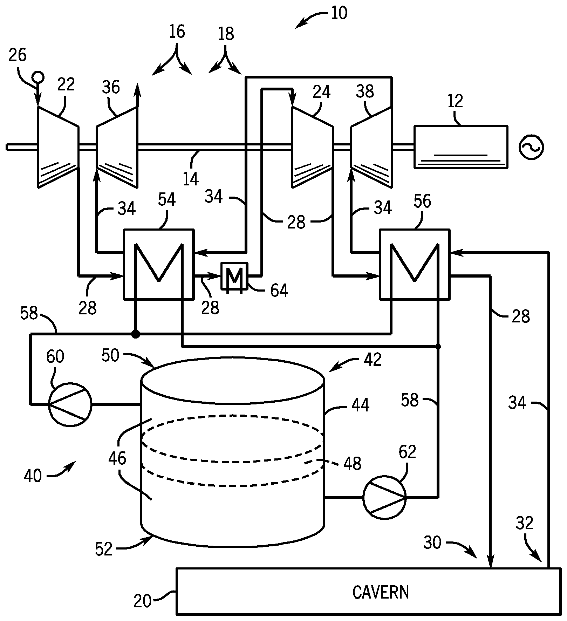

FIG. 1 is a block schematic diagram of an adiabatic compressed air energy storage (ACAES) system according to an embodiment of the present invention.

### DETAILED DESCRIPTION

Embodiments of the invention provide a multi-stage ACAES system with a TES system. The multi-stage ACAES system preferably includes a two-stage compression/expansion system including a low pressure stage and a high pressure stage; however, embodiments of the invention may include more than two stages. The TES system preferably includes a liquid TES system having a heat exchanger for each stage of compression/expansion. The TES system also preferably includes a single tank holding a liquid TES medium that is simultaneously pumped through the heat exchangers during operation. The tank is preferably configured to separate a hot liquid TES medium therein from a cold liquid TES medium therein via a separation system that may include, for example, (1) stratification due to gravity and a system to prevent mixing and convection, (2) separation via a floating piston, or (3) having a thermocline and regenerative thermal storage with solid inventory material.

Referring now to FIG. 1, a block schematic diagram of an adiabatic compressed air energy storage (ACAES) system 10 is shown according to an embodiment of the invention.

ACAES system 10 includes a motor-generator unit 12 (which may be a combined unit or separate units), a drive shaft 14, a compressor system or train 16, a turbine system or train 18, and a compressed air storage volume or cavern 20. Cavern 20 may be, for example, a porous rock formation, a depleted natural gas/oil field, and a cavern in salt or rock formations. Alternatively, cavern 20 can be an above-ground system such as, for example, a high pressure pipeline similar to that used for conveying natural gas.

Motor-generator unit 12 is electrically connected to a power generating plant (not shown) to receive power therefrom. Motor-generator unit 12 and drive shaft 14 are selectively coupled to compressor system 16 and turbine system 18 through clutches (not shown). During a compression mode of operation, compressor system 16 is coupled to motor-generator unit 12 and drive shaft 14, while turbine system 18 is decoupled from the motor-generator unit 12 and drive shaft 14. During an expansion mode of operation, turbine system 18 is coupled to motor-generator unit 12 and drive shaft 14, while compressor system 16 is decoupled from the motor-generator unit 12 and drive shaft 14.

According to an embodiment of the invention, motor-generator unit 12 drives drive shaft 14 during the compression mode of operation (i.e., compression stage). In turn, drive shaft 14 drives compressor system 16, which includes a low pressure compressor 22 and a high pressure compressor 24, such that a quantity of ambient air enters an ambient air intake or inlet 26 and is compressed by the compressor system 16. Low pressure compressor 22 is coupled to high pressure compressor 24 via a compression path or conduit 28. According to the present embodiment, low pressure compressor 22 compresses the ambient air. The compressed ambient air then passes along compression path 28 to high pressure compressor 24, where the ambient air is further compressed before exiting the compression path 28 at a compression path outlet 30 and being transferred to cavern 20.

After compressed air is stored in cavern 20, compressed air can be allowed to enter an inlet 32 of an expansion path or turbine conduit 34 during the expansion mode of operation (i.e., expansion stage). The compressed air proceeds down the expansion path 34 to turbine system 18, which includes a low pressure turbine 36 and a high pressure turbine 38. Due to the configuration of turbine system 18, the compressed air is allowed to expand as it passes therethrough, thus, causing rotation of turbines 36, 38 of turbine system 18 so as to facilitate power generation. The rotation of turbine system 18 causes drive shaft 14 to rotate. In turn, drive shaft 14 drives motor-generator unit 12, causing the unit to function as a generator to produce electricity.

As shown in FIG. 1, ACAES system 10 also includes a multi-stage thermal energy storage (TES) system 40 configured to cool and heat the air passing through the compression and expansion paths 28, 34 as it is being compressed/expanded by the compressor and turbine systems 16, 18. The multi-stage TES system 40 includes a liquid TES unit 42 comprising a containment vessel 44, a liquid TES medium 46, and an optional thermal separator 48. The TES liquid 46 is a heat storage material of sufficient quantity to store the heat of compression generated during the compression cycle. In embodiments of the invention, TES liquid 46 is non-pressurized and may include liquids such as mineral oil, synthetic oil, molten salt, or the like.

Thermal separator 48 is designed to create a strong thermal gradient between a cold TES liquid 46 on one side thereof and a hot TES liquid 46 on another side thereof within containment vessel 44 and to reduce temperatures of TES liquid 46 within containment vessel 44 as close to a binary temperature system as possible. In this manner, hot TES liquid 46 in one end 50 of containment vessel 44 is thermally isolated from cold TES liquid 46 in another end 52 of containment vessel 44. In one embodiment, thermal separator 48 includes a material capable of storing heat and capable of thermally isolating the hot and cold TES liquid 46. In this embodiment, no other thermal separator 48 may be installed within containment vessel 44 to create a thermocline, and the material may include, for example, concrete, rocks, bricks, metal, or the like. In another embodiment, the thermal separator 48 includes a floating separator piston configured to separate the hot and the cold TES liquid 46. In this manner, as cold TES liquid 46 is removed from end 52 of containment vessel 44, the floating separator piston correspondingly lowers within containment vessel 44 while hot TES liquid 46 is added to containment vessel 44 at end 50, and vice-versa. The floating separator piston accordingly floats on the volume of cold TES liquid 46 and rises and falls therewith. In one embodiment, the floating separator piston may comprise metal, plastic or a composite thereof.

In yet another embodiment the thermal separator instead of a piston consist of a multitude of planar devices installed in the vessel and configured in a way to prevent convection and mixing of hot and cold liquid that stays separated due to its gravity difference.

Multi-stage TES system 40 includes a pair of heat exchangers 54, 56 fluidly coupled to TES liquid 46 in liquid TES unit 42 via a TES conduit system 58. TES conduit 58 couples heat exchangers 54, 56 together in a parallel mode such that the temperature of the TES liquid 46 entering each heat exchanger 54, 56 is substantially the same temperature and such that the temperature of the TES liquid 46 exiting each heat exchanger 54, 56 is substantially the same temperature. In one embodiment, heat exchanger 54 is a low pressure heat exchanger, and heat exchanger 56 is a high pressure heat exchanger. Heat exchangers 54, 56 are thermally coupled to compression path 28 and to expansion path 34. A hot-side pump 60 is configured pump hot TES liquid 46 from end 50 of containment vessel 44 through heat exchangers 54, 56 to end 52 of containment vessel 44. A cold-side pump 62 is configured pump cold TES liquid 46 from end 52 of containment vessel 44 through heat exchangers 54, 56 to end 50 of containment vessel 44.

In operation, multi-stage TES system 40 functions to remove heat from the compressed air during a compression or "charging" stage/mode of operation of ACAES system 10. As air is compressed by compressor system 16 and as it passes along compression path 28 to cavern 20, multi-stage TES system 40 cools the compressed air as described below. That is, before the compressed air is stored in cavern 20, it is passed through heat exchangers 54, 56 to remove heat from the compressed air prior to storage in the cavern, so as to protect the integrity thereof.

The heat that is stored by multi-stage TES system 40 in the hot TES liquid 46 is conveyed or transferred back to the compressed air during an expansion or "discharging" stage/mode of operation of ACAES system 10. As the compressed air is released from cavern 20 and passes through expansion path 34 to be expanded by turbine system 18, the air is heated as it passes back through multi-stage TES system 40 as described below.

According to the embodiment of FIG. 1, heat exchangers 54, 56 are positioned intermittently along the compression path 28 and the expansion path 34 to provide cooling/heating to air passing therethrough. Air is brought into compression path 28 through inlet 26 and provided to low pressure compressor 22 during the compression or "charging" stage/mode of operation of ACAES system 10. Low pressure compressor 22 compresses the air to a first pressure level (i.e., a "low" pressure) and to an increased temperature, and the air is then routed through compression path 28 to heat exchanger 54, where the air is cooled. To cool the compressed air in heat exchanger 54, cold-side pump 62 pumps cold TES liquid 46 from end 52 through heat exchanger 54 while the heated compressed air flows in a separate fluid path therethrough. The air then continues through compression path 28 to high pressure compressor 24, where the air is compressed to a second pressure level (i.e., a "high" pressure) and to an increased temperature. The air is then routed through compression path 28 to heat exchanger 56, where the air is again cooled before exiting compression path 28 through outlet 30 for storage in cavern 20. To cool the compressed air in heat exchanger 56, cold-side pump 62 pumps cold TES liquid 46 from end 52 through heat exchanger 56 while the heated compressed air flows in a separate fluid path therethrough. Compression path 28 is thus routed such that heat exchanger 54 is positioned on compression path 28 between low pressure compressor 22 and high pressure compressor 24 and such that heat exchanger 56 is positioned on compression path 28 downstream of the high pressure compressor 24 to cool air compressed by the high pressure compressor.

In one embodiment, heat exchangers 54, 56 are configured to remove the added heat such that the temperature of the compressed air cools back to a near-ambient temperature. In another embodiment, an intercooler 64 may be provided to remove extra heat from the compressed air in compression path 28 between heat exchanger 54 and high pressure compressor 24. The heat removed from the compressed air is transferred to the TES liquid 46 flowing through heat exchangers 54, 56, and the hot or heated TES liquid 46 is delivered to end 50 of containment vessel 44. Thermal separator 48 is configured to maintain a thermal separation between the hot TES liquid 46 and the cold TES liquid 46 in containment vessel 44 such that transference of the heat in the hot TES liquid 46 to the cold TES liquid 46 is minimized. In this manner, a larger amount of heat is available for heating cavern air as described below.

During the expansion or "discharging" stage/mode of operation of ACAES system 10, storage air from cavern 20 is brought into expansion path 34 through inlet 32 and provided to heat exchanger 56. To heat the compressed air in heat exchanger 56, hot-side pump 60 pumps hot TES liquid 46 from end 50 through heat exchanger 56 while the cooled compressed air from cavern 20 flows in a separate fluid path therethrough. High pressure turbine 38 then expands to the first pressure level and reduces a temperature of the air. The air is then routed through expansion path 34 to heat exchanger 54, where the air is again heated. To heat the compressed air in heat exchanger 54, hot-side pump 60 pumps hot TES liquid 46 from end 50 through heat exchanger 54 while the heated compressed air flows in a separate fluid path therethrough. The air then continues through expansion path 34 to low pressure compressor 22, where the air is expanded to a lower pressure level and to a lower temperature. In one embodiment, the air pressure is lowered to ambient pressure, and the temperature is lowered to a near-ambient temperature. The air then exits expansion path 34 into the ambient environment.

It is contemplated that motor-generator unit 12 may be connected to the electric power grid during, for instance, relatively less-expensive, off-peak, or low-demand hours such as at night to receive the power therefrom to operate compressor system 16 during the compression stage. Alternatively or additionally, the power may be derived from renewable sources such as wind, sun, tides, as examples, which often provide intermittent power that may be during less desirable low-demand hours. During the expansion mode of operation, the compressed air stored in cavern 20 is used to drive turbine system 18 and consequently motor-generator unit 12 in an electrical generation mode to produce additional electrical energy for the electric power grid during, for instance, high-energy needs and peak demand times.

It is recognized that embodiments of the invention are not limited to the examples described above. That is, a greater number of compressors and turbines and a greater number of TES units may be employed in an ACAES system, according to embodiments of the invention. The number of compressors desired to efficiently compress air to required operating and storing pressures may vary, as such pressures are highly dependent on the type and depth of air storage device/cavern 20. For example, a pressure range of approximately 400 psi to 1000 psi has been found adequate for a salt dome and aquifer located at a depth of approximately 1500 feet. The number of compressors to be used in compressor system 16 is in part dependent on air pressure and the type of individual compressor stages used, as well as other factors.

Therefore, according to one embodiment of the invention, an adiabatic compressed air energy storage (ACAES) system includes a compressor system configured to compress air supplied thereto. The compressor system includes a plurality of compressors and a compressor conduit fluidly connecting the plurality of compressors together and having an air inlet and an air outlet. The ACAES system also includes an air storage unit connected to the air outlet of the compressor conduit and configured to store compressed air received from the compressor system, and a turbine system configured to expand compressed air supplied thereto from the air storage unit. The turbine system includes a plurality of turbines and a turbine conduit fluidly connecting the plurality of turbines together and having an air inlet and an air outlet. The ACAES system further includes a thermal energy storage (TES) system configured to remove thermal energy from compressed air passing through the compressor conduit and to return thermal energy to air passing through the turbine conduit. The TES system includes a container, a plurality of heat exchangers, a liquid TES medium conduit system fluidly coupling the container to the plurality of heat exchangers, and a liquid TES medium stored within the container. The TES system also includes a plurality of pumps coupled to the liquid TES medium conduit system and configured to transport the liquid TES medium between the plurality of heat exchangers and the container, and a thermal separation system positioned within the container configured to thermally isolate a first portion of the liquid TES medium at a lower temperature from a second portion of the liquid TES medium at a higher temperature.

In accordance with another embodiment of the invention, a method for adiabatic compressed air energy storage (ACAES) includes supplying air to a compressor system, the compressor system including a plurality of compressor units fluidly connected by a compressor conduit. The method also includes compressing the air in the compressor system during a compression stage and storing the compressed air in a compressed air storage unit. The method also includes supplying the compressed air from the compressed air storage unit to a turbine system, the turbine system including a plurality of turbine units fluidly connected by a turbine conduit and expanding the air in the turbine system during an expansion stage. The method further includes, during each of the compression stage and the expansion stage, passing the air through a liquid thermal energy storage (TES) system coupled to each of the compressor conduit and the turbine conduit, the liquid TES system including a liquid storage volume, a plurality of heat exchangers fluidly coupled to the liquid storage volume, and a thermal separation unit configured to thermally isolate a liquid in the liquid storage volume on a first side of the thermal separation unit from a liquid in the liquid storage volume on a second side of the thermal separation unit.

In accordance with yet another embodiment of the invention, an adiabatic compressed air energy storage (ACAES) system includes a compressor system configured to compress air supplied thereto, the compressor system including a plurality of compressors and a compressor conduit connecting the plurality of compressors and having an air inlet and an air outlet. The ACAES system also includes an air storage unit connected to the air outlet of the compressor conduit and configured to store compressed air received from the compressor system, and a turbine system configured to expand compressed air supplied thereto from the air storage unit. The turbine system includes a plurality of turbines and a turbine conduit connecting the plurality of turbines and having an air inlet and an air outlet. The ACAES system further includes a liquid thermal energy storage (TES) system comprising a TES liquid configured to remove thermal energy from compressed air passing through the compressor conduit and to return thermal energy to air passing through the turbine conduit, the liquid TES system further including a storage volume configured to store the TES liquid, a plurality of heat exchangers fluidly coupled to the storage volume, and a thermal separator positioned within the container and configured to thermally separate a hot volume of the TES liquid from a cold volume of the TES liquid within the storage volume.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. An adiabatic compressed air energy storage (ACAES) system (10) comprising:
a compressor system (16) configured to compress air supplied thereto, the compressor system comprising:
a plurality of compressors (22,24); and
a compressor conduit (28) fluidly connecting the plurality of compressors together and having an air inlet and an air outlet;
an air storage unit (20) connected to the air outlet of the compressor conduit (28) and configured to store compressed air received from the compressor system (16);
a turbine system (18) configured to expand compressed air supplied thereto from the air storage unit (20), the turbine system comprising:
a plurality of turbines (36,38); and
a turbine conduit (34) fluidly connecting the plurality of turbines together and having an air inlet and an air outlet; and
a thermal energy storage (TES) system (40) configured to remove thermal energy from compressed air passing through the compressor conduit and to return thermal energy to air passing through the turbine conduit, the TES system comprising:
a container (42);
a plurality of heat exchangers (54,56);
a liquid TES medium conduit system (58) fluidly coupling the container to the plurality of heat exchangers;
a liquid TES medium stored within the container;
a plurality of pumps (60,62) coupled to the liquid TES medium conduit system and configured to transport the liquid TES medium between the plurality of heat exchangers and the container; and
a thermal separation system (48) positioned within the container (42) configured to thermally isolate a first portion of the liquid TES medium at a lower temperature from a second portion of the liquid TES medium at a higher temperature,
wherein the plurality of compressors comprises a low pressure compressor (22) and a high pressure compressor (24);
the plurality of turbines comprises a low pressure turbine (36) and a high pressure turbine (38); and
the plurality of heat exchangers comprises:
a first heat exchanger (54) connected to the compressor conduit (28) between the low pressure compressor (22) and the high pressure compressor (24) and connected to the turbine conduit (34) between the low pressure turbine (36) and the high pressure turbine (38); and
a second heat exchanger (56) connected to the compressor conduit (28) between the high pressure compressor (24) and the air storage unit (20) and connected to the turbine conduit (34) between the high pressure turbine (38) and the air storage unit (20).

2. The ACAES system of claim 1 wherein the thermal separation system (48) comprises a floating separator piston configured to vary its position within the container according to the amount of liquid TES medium at the first temperature within the container.

3. The ACAES system of claim 1 wherein the thermal separation system (48) comprises a medium positioned at a fixed location within the container.

4. The ACAES system of claim 3 wherein the thermal separation system comprises one of concrete, rocks, bricks, and metal.

5. The ACAES system of claim 1 wherein the liquid TES medium conduit system (58) fluidly couples the plurality of heat exchangers (54,56) together in a parallel mode.

6. The ACAES system of claim 1 further comprising:
a first pump (60) fluidly coupled to the liquid TES medium conduit system and configured to convey a quantity of the liquid TES medium within the container and on a first side of the thermal separation system to the plurality of heat exchangers; and
a second pump (62) fluidly coupled to the liquid TES medium conduit system and configured to convey a quantity of the liquid TES medium within the container and on a second side of the thermal separation system to the plurality of heat exchangers.

7. The ACAES system of claim 1, wherein the compressor conduit (28) is arranged to pass air at a first pressure through the first heat exchanger (54) and to subsequently pass air at a second pressure through the second heat exchanger (56); and
wherein the turbine conduit (34) is arranged to pass air at the second pressure through the second heat exchanger (56) and to subsequently pass air at the first pressure through the first heat exchanger (54).

8. The ACAES system of claim 7, wherein the air at the first pressure comprises low pressure air and the air at the second pressure comprises high pressure air.

9. The ACAES system of claim 1, further comprising an intercooler (64) connected to the compressor conduit (28) between the first heat exchanger (54) and the high pressure compressor (24).

10. The ACAES system of claim 1 further comprising:
a drive shaft (14) coupleable to the compressor system (16) and coupleable to the turbine system (18), the drive shaft configured to transfer rotational power to the compressor system and configured to receive rotational power from the turbine system; and
a motor-generator unit (12) coupled to the drive shaft and configured to:
receive electrical energy from an external energy source and generate and transfer rotational power to the drive shaft; and
receive rotational power from the drive shaft and generate electrical energy in response thereto.

11. A method for adiabatic compressed air energy storage (ACAES) comprising:
supplying air to a compressor system (16), the compressor system including a plurality of compressor units fluidly connected by a compressor conduit;
compressing the air in the compressor system during a compression stage;
storing the compressed air in a compressed air storage unit (20);
supplying the compressed air from the compressed air storage unit to a turbine system (18), the turbine system including a plurality of turbine units fluidly connected by a turbine conduit;
expanding the air in the turbine system (18) during an expansion stage; and
during each of the compression stage and the expansion stage, passing the air through a liquid thermal energy storage (TES) system (40) coupled to each of the compressor conduit and the turbine conduit, the liquid TES system comprising:
a liquid storage volume;
a plurality of heat exchangers (54,56) fluidly coupled to the liquid storage volume; and
a thermal separation unit (48) configured to thermally isolate a liquid in the liquid storage volume on a first side of the thermal separation unit from a liquid in the liquid storage volume on a second side of the thermal separation unit,
wherein passing the air through the plurality of TES units comprises:
passing the air through a first heat exchanger (54) of the plurality of heat exchangers and subsequently passing the air through a second heat exchanger (56) of the plurality of heat exchangers when passing the air through the compressor conduit (28) such that low pressure air passes through the first heat exchanger and high pressure air passes through the second heat exchanger; and
passing the air through the second heat exchanger (56) and subsequently passing the air through the first heat exchanger (54) when passing the air through the turbine conduit such that high pressure air passes through the second heat exchanger (56) and low pressure air passes through the first heat exchanger (54).

12. The method of claim 11, further comprising:
pumping the liquid in the liquid storage volume on the first side of the thermal separation unit (48) through the plurality of heat exchangers in a parallel mode during the compression stage to remove heat from the air passing through the compressor conduit; and
pumping the liquid in the liquid storage volume on the second side of the thermal separation unit (48) through the plurality of heat exchangers in a parallel mode during the expansion stage to add heat to the air passing through the turbine conduit.

## Patentansprüche

1. Adiabatisches Druckluftenergiespeicher-(ACAES)-System (10), umfassend:
ein Kompressorsystem (16), das dafür ausgelegt ist, Luft zu komprimieren, die demselben zugeführt wird, wobei das Kompressorsystem umfasst:
mehrere Kompressoren (22, 24); und
eine Kompressorleitung (28), die fluidisch die mehreren Kompressoren miteinander verbindet und einen Lufteinlass und einen Luftauslass hat;
eine Luftspeichereinheit (20), die mit dem Luftauslass der Kompressorleitung (28) verbunden ist und dafür ausgelegt ist, komprimierte Luft zu speichern, die vom Kompressorsystem (16) aufgenommen wird;
ein Turbinensystem (18), das dafür ausgelegt ist, komprimierte Luft zu expandieren, die demselben aus der Luftspeichereinheit (20) zugeführt wird,
wobei das Turbinensystem umfasst:
mehrere Turbinen (36, 38); und
eine Turbinenleitung (34), die die mehreren Turbinen miteinander verbindet und einen Lufteinlass und einen Luftauslass hat; und
ein thermisches Energiespeicher-(TES)-System (40), das dafür ausgelegt ist, thermische Energie aus der komprimierten Luft, die durch die Kompressorleitung fließt, zu entfernen und thermische Energie an Luft zurückzuführen, die durch die Turbinenleitung fließt, wobei das TES-System umfasst:
einen Behälter (42);
mehrere Wärmetauscher (54, 56);
ein flüssiges TES-Mediumleitungssystem (58), das fluidisch den Behälter mit den mehreren Wärmetauschern verbindet;
ein flüssiges TES-Medium, das innerhalb des Behälters gespeichert ist;
mehrere Pumpen (60, 62), die mit dem flüssigen TES-Mediumleitungssystem verbunden sind und dafür ausgelegt sind, das flüssige TES-Medium zwischen den mehreren Wärmetauschern und dem Behälter zu transportieren; und
ein thermisches Trennsystem (48), das innerhalb des Behälters (42) positioniert ist und dafür ausgelegt ist, einen ersten Teil des flüssigen TES-Mediums bei einer niedrigeren Temperatur von einem zweiten Teil des flüssigen TES-Mediums bei einer höheren Temperatur thermisch zu isolieren,
wobei die mehreren Kompressoren einen Niederdruckkompressor (22) und einen Hochdruckkompressor (24) umfassen;
die mehreren Turbinen eine Niederdruckturbine (36) und eine Hochdruckturbine (38) umfassen; und
die mehreren Wärmetauscher umfassen:
einen ersten Wärmetauscher (54), der mit der Kompressorleitung (28) zwischen dem Niederdruckkompressor (22) und dem Hochdruckkompressor (24) verbunden ist und der mit der Turbinenleitung (34) zwischen der Niederdruckturbine (36) und
der Hochdruckturbine (38) verbunden ist; und
einen zweiten Wärmetauscher (56), der mit der Kompressorleitung (28) zwischen dem Hochdruckkompressor (24) und der Luftspeichereinheit (20) verbunden ist und der mit der Turbinenleitung (34) zwischen der Hochdruckturbine (38) und der Luftspeichereinheit (20) verbunden ist.

2. ACAES-System nach Anspruch 1, wobei das thermische Trennsystem (48) einen Schwimmtrennkolben umfasst, der dafür ausgelegt ist, seine Position innerhalb des Behälters entsprechend der Menge des flüssigen TES-Mediums bei der ersten Temperatur innerhalb des Behälters zu variieren.

3. ACAES-System nach Anspruch 1, wobei das thermische Trennsystem (48) ein Medium enthält, das an einem festen Ort innerhalb des Behälters positioniert ist.

4. ACAES-System nach Anspruch 3, wobei das thermische Trennsystem ein Element aus Beton, Felsstein, Ziegelstein und Metall umfasst.

5. ACAES-System nach Anspruch 1, wobei das flüssige TES-Mediumleitungssystem (58) die mehreren Wärmetauscher (54, 56) fluidisch parallel miteinander verbindet.

6. ACAES-System nach Anspruch 1, das ferner umfasst:
eine erste Pumpe (60), die fluidisch mit dem flüssigen TES-Mediumleitungssystem verbunden ist und dafür ausgelegt ist, eine Menge des flüssigen TES-Mediums innerhalb des Behälters und auf einer ersten Seite des thermischen Trennsystems zu den mehreren Wärmetauschern zu transportieren; und
eine zweite Pumpe (62), die fluidisch mit dem flüssigen TES-Mediumleitungssystem verbunden und dafür ausgelegt ist, eine Menge des flüssigen TES-Mediums innerhalb des Behälters und auf einer zweiten Seite des thermischen Trennsystems zu den mehreren Wärmetauschern zu transportieren.

7. ACAES-System nach Anspruch 1, wobei die Kompressorleitung (28) dafür ausgelegt ist, Luft bei einem ersten Druck durch den ersten Wärmetauscher (54) passieren zu lassen und anschließend Luft bei einem zweiten Druck durch den zweiten Wärmetauscher (56) passieren zu lassen; und
wobei die Turbinenleitung (34) dafür ausgelegt ist, Luft bei dem zweiten Druck durch den zweiten Wärmetauscher (56) strömen zu lassen und anschließend Luft beim ersten Druck durch den ersten Wärmetauscher (54) strömen zu lassen.

8. ACAES-System nach Anspruch 7, wobei die Luft beim ersten Druck Niederdruckluft umfasst und die Luft beim zweiten Druck Hochdruckluft umfasst.

9. ACAES-System nach Anspruch 1, das ferner einen Ladeluftkühler (64) umfasst, der mit der Kompressorleitung (28) zwischen dem ersten Wärmetauscher (54) und dem Hochdruckkompressor (24) verbunden ist.

10. ACAES-System nach Anspruch 1, das ferner umfasst:
eine Antriebswelle (14), die mit dem Kompressorsystem (16) verbunden werden kann und die mit dem Turbinensystem (18) verbunden werden kann, wobei die Antriebswelle dafür ausgelegt ist, Rotationsenergie auf das Kompressorsystem zu übertragen, und dafür ausgelegt ist, Rotationsenergie vom Turbinensystem zu empfangen; und
eine Motor-Generator-Einheit (12), die mit der Antriebswelle verbunden und dafür ausgelegt ist:
elektrische Energie von einer externen Energiequelle zu erhalten und Rotationsenergie auf die Antriebswelle zu übertragen; und
Rotationsenergie von der Antriebswelle zu erhalten und elektrische Energie als Reaktion darauf zu erzeugen.

11. Verfahren zur adiabatischen Energiespeicherung von komprimierter Luft (ACAES), umfassend:
Zufuhr von Luft zu einem Kompressorsystem (16), wobei das Kompressorsystem mehrere Kompressoreinheiten umfasst, die fluidisch durch eine Kompressorleitung verbunden sind;
Komprimieren der Luft im Kompressorsystem während einer Kompressionsphase;
Speichern der komprimierten Luft in einer Speichereinheit für komprimierte Luft (20);
Zufuhr der komprimierten Luft von der Speichereinheit für komprimierte Luft zu einem Turbinensystem (18), wobei das Turbinensystem mehrere Turbineneinheiten umfasst, die fluidisch durch eine Turbinenleitung verbunden sind;
Expandieren der Luft im Turbinensystem (18) während einer Expansionsphase; und
während jeder Kompressionsphase und Expansionsphase, Luft durch ein Speichersystem für flüssige thermische Energie (TES) (40) strömen zu lassen, das sowohl mit der Kompressorleitung als auch mit der Turbinenleitung verbunden ist,
wobei das Flüssigkeits-TES-System umfasst: ein Flüssigkeits-Speichervolumen;
mehrere Wärmetauscher (54, 56), die fluidisch mit dem Flüssigkeits-Speichervolumen verbunden sind; und
eine thermische Trenneinheit (48), die dafür ausgelegt ist, eine Flüssigkeit im Flüssigkeits-Speichervolumen auf einer ersten Seite der thermischen Trenneinheit von einer Flüssigkeit im Flüssigkeits-Speichervolumen auf einer zweiten Seite der thermischen Trenneinheit thermisch zu isolieren,
wobei das Strömen der Luft durch die mehreren TES-Einheiten umfasst:
Strömen der Luft durch einen ersten Wärmetauscher (54) der mehreren Wärmetauscher und anschließend Strömen der Luft durch einen zweiten Wärmetauscher (56) der mehreren Wärmetauscher, wenn die Luft durch die Kompressorleitung (28) derart strömt, dass Niederdruckluft durch den ersten Wärmetauscher strömt und Hochdruckluft durch den zweiten Wärmetauscher strömt; und
Strömen der Luft durch den zweiten Wärmetauscher (56) und anschließend Strömen der Luft durch den ersten Wärmetauscher (54), wenn die Luft durch die Turbinenleitung derart strömt, dass Hochdruckluft durch den zweiten Wärmetauscher (56) strömt und Niederdruckluft durch den ersten Wärmetauscher (54) strömt.

12. Verfahren nach Anspruch 11, das ferner umfasst:
Pumpen der Flüssigkeit im Flüssigkeits-Speichervolumen auf der ersten Seite der thermischen Trenneinheit (48) durch die mehreren Wärmetauscher im Parallelbetrieb während der Kompressionsphase, um Wärme aus der Luft zu entfernen, die durch die Kompressorleitung strömt; und
Pumpen der Flüssigkeit im Flüssigkeits-Speichervolumen auf der zweiten Seite der thermischen Trenneinheit (48) durch die mehreren Wärmetauscher im Parallelbetrieb während der Expansionsphase, um der Luft, die durch die Turbinenleitung strömt, Wärme zuzusetzen.

## Revendications

1. Système (10) de stockage d'énergie d'air comprimé adiabatique (ACAES) comprenant :
un système de compression (16) configuré pour comprimer de l'air qui lui est fourni, le système de compression comprenant :
une pluralité de compresseurs (22, 24) ; et
une conduite de compresseurs (28) raccordant en communication fluidique la pluralité de compresseurs conjointement et ayant une entrée d'air et une sortie d'air ;
une unité de stockage d'air (20) raccordée à la sortie d'air de la conduite de compresseurs (28) et configurée pour stocker l'air comprimé reçu du système de compression (16) ;
un système de turbines (18) configuré pour dilater l'air comprimé qui lui est fourni en provenance de l'unité de stockage d'air (20), le système de turbines comprenant :
une pluralité de turbines (36, 38) ; et
une conduite de turbines (34) raccordant en communication fluidique la pluralité de turbines conjointement et ayant une entrée d'air et une sortie d'air; et
un système (40) de stockage d'énergie thermique (TES) (40) configuré pour éliminer de l'énergie thermique de l'air comprimé passant à travers la conduite de compresseurs et renvoyer de l'énergie thermique à l'air passant à travers la conduite de turbines, le système TES comprenant :
un contenant (42) ;
une pluralité d'échangeurs de chaleur (54, 56) ;
un système de conduites de milieu TES liquide (58) couplant en communication fluidique le contenant à la pluralité d'échangeurs de chaleur ;
un milieu TES liquide stocké dans le contenant ;
une pluralité de pompes (60, 62) couplées au système de conduites de milieu TES liquide et configurées pour transporter le milieu TES liquide entre la pluralité d'échangeurs de chaleur et le contenant ; et
un système de séparation thermique (48) positionné dans le contenant (42) et configuré pour isoler thermiquement une première partie du milieu TES liquide à une température plus basse d'une seconde partie du milieu TES liquide à une température plus élevée,
dans lequel la pluralité de compresseurs comprend un compresseur basse pression (22) et un compresseur haute pression (24) ;
la pluralité de turbines comprend une turbine basse pression (36) et une turbine haute pression (38) ; et
la pluralité d'échangeurs de chaleur comprend :
un premier échangeur de chaleur (54) raccordé à la conduite de compresseurs (28) entre le compresseur basse pression (22) et le compresseur haute pression (24) et raccordé à la conduite de turbines (34) entre la turbine basse pression (36) et la turbine haute pression (38) ; et
un second échangeur de chaleur (56) raccordé à la conduite de compresseurs (28) entre le compresseur haute pression (24) et l'unité de stockage d'air (20) et raccordé à la conduite de turbines (34) entre la turbine haute pression (38) et l'unité de stockage d'air (20).

2. Système ACAES selon la revendication 1, dans lequel le système de séparation thermique (48) comprend un piston séparateur flottant configuré pour faire varier sa position dans le contenant selon la quantité de milieu TES liquide à la première température dans le contenant.

3. Système ACAES selon la revendication 1, dans lequel le système de séparation thermique (48) comprend un milieu positionné à un emplacement fixe dans le contenant.

4. Système ACAES selon la revendication 3, dans lequel le système de séparation thermique comprend l'un constitué de béton, de roche, de briques et de métal.

5. Système ACAES selon la revendication 1, dans lequel le système de conduites de milieu TES liquide (58) couple en communication fluidique la pluralité d'échangeurs de chaleur (54, 56) conjointement en mode parallèle.

6. Système ACAES selon la revendication 1, comprenant en outre :
une première pompe (60) couplée en communication fluidique avec le système de conduites de milieu TES liquide et configurée pour acheminer une quantité du milieu TES liquide dans le contenant et sur un premier côté du système de séparation thermique à la pluralité d'échangeurs de chaleur ; et
une seconde pompe (62) couplée en communication fluidique avec le système de conduites de milieu TES liquide et configurée pour acheminer une quantité du milieu TES liquide dans le contenant et sur un second côté du système de séparation thermique à la pluralité d'échangeurs de chaleur.

7. Système ACAES selon la revendication 1, dans lequel la conduite de compresseurs (28) est agencée pour faire passer de l'air à une première pression à travers le premier échangeur de chaleur (54) et faire passer ensuite de l'air à une seconde pression à travers le second échangeur de chaleur (56) ; et
dans lequel la conduite de turbines (34) est agencée pour faire passer de l'air à la seconde pression à travers le second échangeur de chaleur (56) et pour faire passer ensuite de l'air à la première pression à travers le premier échangeur de chaleur (54).

8. Système ACAES selon la revendication 7, dans lequel l'air à la première pression comprend de l'air à basse pression et l'air à la seconde pression comprend de l'air à haute pression.

9. Système ACAES selon la revendication 1, comprenant en outre un refroidisseur intermédiaire (64) raccordé à la conduite de compresseurs (28) entre le premier échangeur de chaleur (54) et le compresseur haute pression (24).

10. Système ACAES selon la revendication 1, comprenant en outre :
un arbre d'entraînement (14) qui peut être couplé au système de compression (16) et qui peut être couplé au système de turbines (18), l'arbre d'entraînement étant configuré pour transférer le pouvoir de rotation au système de compresseurs et configuré pour recevoir un pouvoir de rotation du système de turbines ; et
une unité générateur-moteur (12) couplée à l'arbre d'entraînement et configurée pour :
recevoir de l'énergie électrique d'une source d'énergie externe et générer et transférer un pouvoir de rotation à l'arbre d'entraînement ; et
recevoir un pouvoir de rotation de l'arbre d'entraînement et générer de l'énergie électrique en réponse à cette situation.

11. Procédé de stockage d'énergie d'air comprimé adiabatique (ACAES) comprenant :
la fourniture d'air à un système de compression (16), le système de compression comprenant une pluralité d'unités de compresseur raccordées en communication fluidique par une conduite de compresseurs ;
la compression de l'air dans le système de compression au cours d'un stade de compression ;
le stockage de l'air comprimé dans une unité de stockage d'air comprimé (20) ;
la fourniture de l'air comprimé de l'unité de stockage d'air comprimé à un système de turbines (18), le système de turbines comprenant une pluralité d'unités de turbine raccordées en communication fluidique par une conduite de turbines ;
l'expansion de l'air dans le système de turbines (18) au cours d'un stade d'expansion ; et
au cours de chacun du stade de compression et du stade d'expansion, le passage de l'air à travers un système (40) de stockage d'énergie thermique liquide (TES) couplé à chacune de la conduite de compresseurs et de la conduite de turbines, le système TES liquide comprenant :
un volume de stockage de liquide ;
une pluralité d'échangeurs de chaleur (54, 56) couplés en communication fluidique avec le volume de stockage de liquide ; et
une unité de séparation thermique (48) configurée pour isoler thermiquement un liquide dans le volume de stockage de liquide sur un premier côté de l'unité de séparation thermique d'un liquide dans le volume de stockage liquide sur un second côté de l'unité de séparation thermique,
dans lequel le passage de l'air à travers la pluralité d'unités TES comprend :
le passage de l'air à travers un premier échangeur de chaleur (54) de la pluralité d'échangeurs de chaleur et le passage ensuite de l'air à travers un second échangeur de chaleur (56) de la pluralité d'échangeurs de chaleur lors du passage de l'air à travers la conduite de compresseurs (28) en sorte que de l'air basse pression passe à travers le premier échangeur de chaleur et que de l'air haute pression passe à travers le second échangeur de chaleur ; et
le passage de l'air à travers le second échangeur de chaleur (56) et le passage ensuite de l'air à travers le premier échangeur de chaleur (54) lors du passage de l'air à travers la conduite de turbines de sorte que de l'air haute pression passe à travers le second échangeur de chaleur (56) et que de l'air basse pression passe à travers le premier échangeur de chaleur (54).

12. Procédé selon la revendication 11, comprenant en outre :
le pompage du liquide dans le volume de stockage de liquide sur le premier côté de l'unité de séparation thermique (48) à travers la pluralité d'échangeurs de chaleur en mode parallèle au cours du stade de compression pour éliminer la chaleur de l'air passant à travers la conduite de compresseurs ; et
le pompage du liquide dans le volume de stockage de liquide sur le second côté de l'unité de séparation thermique (48) à travers la pluralité d'échangeurs de chaleur en mode parallèle au cours du stade d'expansion afin d'ajouter de la chaleur à l'air passant à travers la conduite de turbines.
